# EUROPEAN PATENT APPLICATION

(11) **EP 1 340 925 A1**
(43) Date of publication of application: **03.09.2003**
(21) Application number: 01999232.0
(22) Date of filing: 28.11.2001
(51) Int. Cl.: F16D 23/06

(54) **SYNCHRONIZER FOR SPEED REDUCER**

(30) Priority: 04.12.2000 JP 2000403857
(71) Applicant: Kyowa Metal Works Co., Ltd, Yokohama-shi, Kanagawa 236-0002 (JP)
(72) Inventor: Hiraiwa, Kazuyoshi, c/o Kyowa Metal Works Co., Ltd, Yokohama, Kanagawa 236-0002 (JP)
(74) Representative: Grünecker, Kinkeldey, Stockmair & Schwanhäusser Anwaltssozietät
(86) International application number: JP0110398
(87) International publication number: WO02046633

(57) **Abstract**

The synchronizer apparatus have a hub set on the shaft, a sleeve supported at the outside of the hub and engaged together, a sift gear with a clutch gear engageable with the sleeve, a synchronizer ring with friction surface, the lever members multiplying a force from the sleeve by using leverage and transmitting its multiplied force to the synchronizer ring. The lever members are disposed in a cut-off portions of the hub. Therefore, the apparatus become compact, eliminating a space for setting the lever members, and minimize the effect on a shift operation force, for the lever members are formed slmall to reduce the centrifugal force acting on them.

## Description

### FIELD OF THE INVENTION

The present invention relates to a synchronizer apparatus for a transmission which can multiply a force from a sleeve that moves toward a shifting gear and push a synchronizer ring by the multiplied force during the shift operation (gear-change operation) of the transmission.

### BACKGROUND OF THE PRESENT INVENTION

A conventional synchronizer apparatus for a transmission is disclosed in US PAT No 5,695,033 (corresponding to Japanese Patent Publication Tokkaihei 09-89002) as having a plurality of lever members arranged between the sleeve, the hub and the synchronizer ring, thus pushing the synchronizer ring by the multiplied force using leverage of the lever members.

In this conventional synchronizer apparatus, a plurality of arc-shaped lever members are disposed between the sleeve, the hub and the synchronizer ring, and multiply a force from the sleeve that moves toward the shift gear by using leverage of the lever members to transmit the multiplied force to the synchronizer ring, which pushes strongly each other the both friction surfaces of the synchronizer ring and the shift gear. This results that it can obtain a synchronizing capacity larger than the common Borg-Warner type synchronizer apparatus when the same operation force being applied.

The conventional synchronizer apparatus for a transmission, however, encounters such a problem that it brings a disadvantage to install the transmission with the aforementioned synchronizer apparatus in a car. The reason is that the lever members require a space large and long in an axial direction of the transmission for their arrangement into the transmission.

Also it has such another problem that the conventional synchronizer apparatus is hard to adopt to that for the high speed, for example, a speed higher than the 3-rd speed. This reason is that the lever members are large and heavy to cause a large centrifugal forces acting on them, which results in a heavy shift operation force to push down the lever members inward in the radial direction of the hub against the centrifugal forces when the sleeve moving toward the shift gear.

Moreover, it has such a further problem that a manufacturing cost becomes high because of an increase of the number of the lever members to obtain a transmission that has shift gears disposed at each side of the hub and the lever members pushing the synchronizer rings between the two shift gears and the hub.

Moreover, in case of adapting the lever members on a so-called double-cone type synchronizer apparatus of which cone rings and a inner ring have two sets of friction surfaces contactable each other to obtain higher synchronizing capacity, shown in FIG. 13 of US PAT No. 5,695,033 (corresponding to Japanese Patent Publication Tokkaihei 9-89002), the conventional synchronizer apparatus has such a further problem that the set value of lever ratio of the lever members is restricted from an accuracy of dimension in the axial direction of the assembly of parts, such as the cone ring, the inner ring and the synchronizer ring (outer ring).

Namely, the lever ratio of the lever members is restricted from a stroke from the sleeve's neutral position to the sleeve's position starting to mesh with the clutch gear, an estimated wear quantity and an accuracy of dimensions in the axial direction and a thermal expansion of the related parts, such as the synchronizer ring, the lever members, the hub, the shift gear and the like.

The double-cone type synchronizer apparatus has such an advantage that the effect on the lever ratio of dimensional changes at high temperature is small even when using a steel friction surface and a copper friction surface, both friction surfaces being cone-shaped, from the reason that the dimensional changes caused by difference of thermal expansion ratios of steel and copper are set off by difference between the dimensional changes at two sets of the friction surfaces. But it has such a disadvantage that a large lever ratio is hard to obtain, because a lot of parts are used in the double-cone type synchronizer apparatus and effects its accuracy of dimension.

Accordingly, it is an object of the present invention to provide a synchronizer apparatus which can downsize its dimension by eliminating an additional space in the axial direction for disposing the lever members and minimize the effect on the shifting operation force caused by the centrifugal forces acting on the lever members. It is another object of the present invention to provide a synchronizer apparatus which can reduce its manufacturing cost of the synchronizer apparatus with the lever members able to push the both synchronizer rings disposed at each side of the hub.

### SUMMARY OF THE INVENTION

According to the first aspect of the present invention there is provided a synchronizer apparatus for a transmission comprising:
A synchronizer apparatus for a transmission comprising: a shaft transmitting a torque, a hub having a boss set on the shaft and a flange portion extending outward in a radial direction from the boss, the flange portion having a spline on the peripheral side of the flange portion, a sleeve having a spline on the inner side of the sleeve, the spline of the sleeve being meshed with the spline of the hub and supported to slide in regard to the hub, a shift gear integrally having a clutch gear to mesh with the sleeve and a friction surface for a synchronization at the hub side of the shift gear, a synchronizer ring having a friction surface to be pressed to the friction surface of the shift gear, a plurality of lever members disposed between the sleeve, the hub and the synchronizer ring, the lever members functioning as a lever to multiply a pushing force of the sleeve toward the shift gear to transmit the multiplied force to the synchronizer ring, the hub having a plurality of cut-off portions , the cut-off portions being formed at the flange portion extending to the peripheral side and having side surfaces parallel to each other, the lever members being disposed in the cut-off portions and biased outward in the radial direction to contact the sleeve and having a plurality of surfaces slidable on the side surfaces the cut-off portions.

In the above synchronizer apparatus, the lever members push the synchronizer ring by the multiplied force by using leverage of the lever members to carry out synchronization when the sleeve pushes the synchronizer ring through the lever members.

The synchronizer apparatus of the present invention can be built the whole synchronizer apparatus in a compact size, eliminating a space for the lever members in the axial direction. It also can minimize an increase of a shift operation force, for example, in a synchronizer apparatus for a high speed because of reducing the centrifugal force acting on the lever members at a high rotational speed.

Preferably the synchronizer ring has a pressed surface pushed by the lever members and a projection projecting from the pressed surface toward the lever members, the projection being formed in a trapezoid-like shape in section and having two tapered surfaces, the lever members having one of a hole and a cut-off portion that can contact the projection with allowance in a rotational direction

According to the above construction, one of the tapered surfaces of the synchronizer ring pushes up the lever members outward in the radial direction by the friction torque generated during the synchronizing action. The sleeve is restricted its movement with pushing down the lever members, consequently continues to push them.

Accordingly, in the above synchronizer apparatus of the present invention, the lever members function to restrict the movement of the sleeve until the synchronization finishes. This results in that the whole synchronizer apparatus can be built in a compact size, eliminating a space for the lever members in the axial direction. In addition, the lever members can be formed in a small size.

Preferably the spring is a leaf spring disposed between inward portions of the lever members and the hub and has a grip portion, the grip potion of the spring being caught in a place between edge portions as fulcrums of the lever members and the hub.

Accordingly, the force acting on the fulcrum of the lever members during the synchronizing action is transmitted to the hub through the grip portion of the spring. This brings such an advantage to this synchronizer apparatus of the present invention that abrasion of the hub is reduced without a heat treatment.

Preferably the synchronizer rings are respectively disposed at each side of the hub in an axial direction, the lever members being able to push each of the synchronizer rings.

In the above construction, the lever members push one of the synchronizer rings by the multiplied force using leverage of the lever members when the sleeve moves toward the one, and push the other of the synchronizer rings when the sleeve moves toward the other in the opposite direction to the one.

Accordingly, this synchronizer apparatus of the present invention can be built in a compact size, reducing the number of the levers.

Preferably the lever members pushes one of the synchronizer rings by a multiplied force using leverage from a movement of the sleeve toward the shift gear, and pushing the other of the synchronizer rings by a substantially constant force in an initial stage of a synchronizing action.

In the above construction, the lever members push one of the synchronizer rings by the multiplied force using leverage of the lever members when the sleeve moves toward the one, and push the other of the synchronizer rings with a substantially constant force when the sleeve moves toward the other in the opposite direction to the one to start the synchronizing action. Accordingly, this synchronizer apparatus of the present invention can obtain a good performance balance between the forces acting on the synchronizer rings to increase only the force acting on one the synchronizer rings.

According to the first aspect of the present invention there is provided a synchronizer apparatus for a transmission comprising: a shaft transmitting a torque, a hub having a boss set on the shaft and a flange portion extending outward in a radial direction from the boss, the flange portion having a spline on the peripheral side of the flange, a sleeve having a spline on the inner side of the sleeve, the spline of the sleeve being meshed with the spline of the hub and supported to slide in regard to the hub, a shift gear integrally having a clutch gear to mesh with the sleeve and a friction surface for a synchronization at the hub side of the shift gear, a cone ring rotatable together with the clutch gear and having inner and outer friction surfaces on an inner and outer side of the cone ring, an inner ring which can contact the inner ring with an allowance in a radial direction, the inner ring having a friction surface to be pressed to the inner friction surfaces of the cone ring, a synchronizer ring which can contact the hub with an allowance in a radial direction, the synchronizer ring having a friction surface to be pressed to the outer friction surface of the cone ring, a plurality of lever members disposed between the sleeve, the hub and the synchronizer ring, the lever members functioning as a lever to multiply a pushing force of the sleeve toward the shift gear to transmit the multiplied force to the synchronizer ring so that a force acting on a fulcrum of the lever members is transmitted to the hub through the inner ring.

In this synchronizer apparatus, when the sleeve pushes one of the synchronizer rings, the lever members multiply the force from the sleeve using leverage, the hub being a fulcrum, through the inner ring of the other side. Therefore the synchronizer apparatus of this invention can set a large lever ratio to increase a synchronizing capacity despite of fluctuation of dimensional accuracy of the parts.

### BRIEF DESCRIPTION OF THE DRAWINGS

The FIG.1 is a sectional view of the first embodiment of the present invention.
The FIG. 2 is a sectional view taken on line B-B of FIG.1.
The FIG. 3 is a fragmentary enlarged view of FIG.1.
The FIG. 4 is an enlarged elevation of the lever.
The FIG. 5 is an elevation of 4th synchronizer ring as it appears from the hub side.
The FIG. 6 is a sectional view of the second embodiment of the present invention.
The FIG.7 is a sectional view of the second embodiment of the present invention.
The FIG.8 is a fragmentary enlarged view of FIG.7.
The FIG.9 is a side view of the lever, the spring and the fragmentary sectional hub.
The FIG.10 is a sectional view of the fourth embodiment of the present invention.

### DESCRIPTION OF THE PREFFERRED EMBODIMENTS

This invention will be described in further detail by the best mode embodiment.

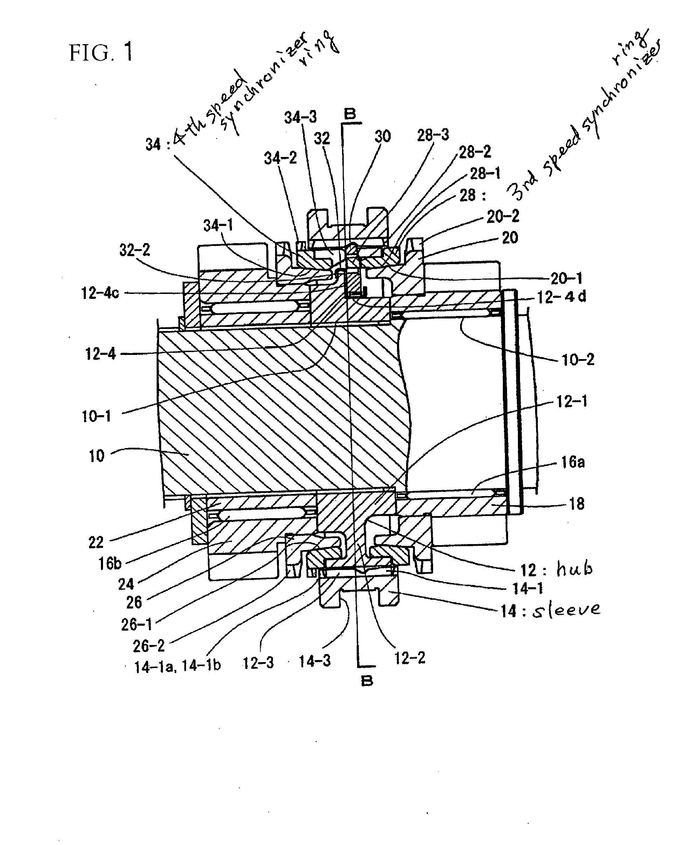

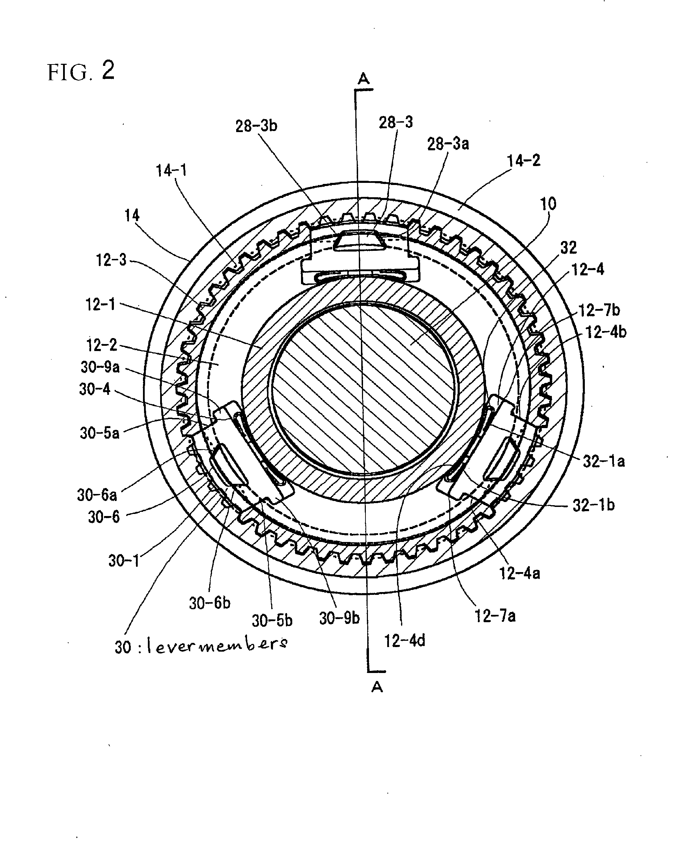

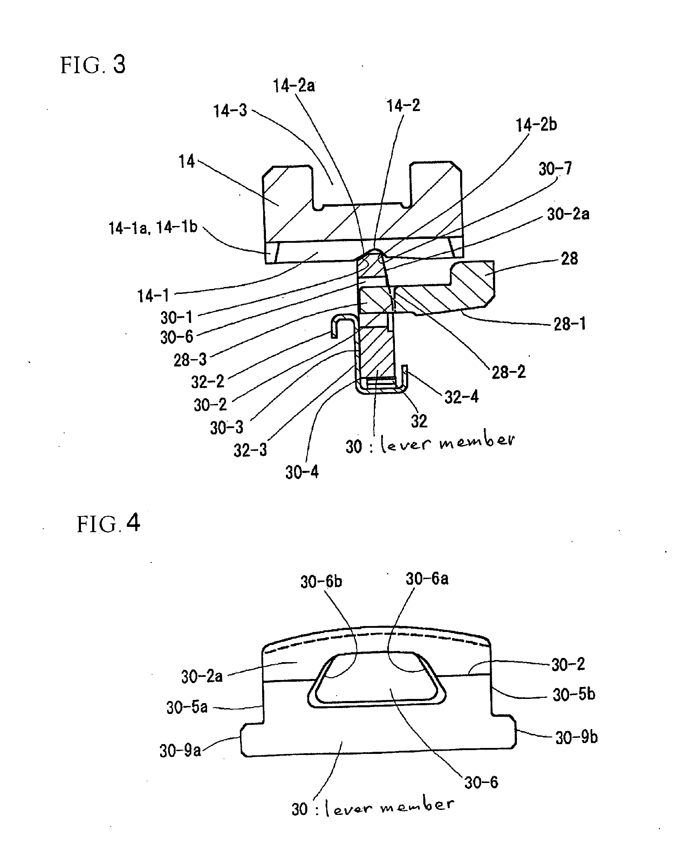

FIG.1 and FIG.2 show sectional views of main parts of the synchronizer apparatuses for the 3-rd and 4-th speed according to the first embodiment. FIG. 1 shows the sectional view taken on line A-A of FIG.2, and FIG.2 shows the sectional view taken on line B-B of FIG.1. FIG.3 shows a fragmentary enlarged view of FIG.1.

At first, the outline of the construction of this embodiment will be explained. Referring to FIG.1, a shaft 10 has an external spline 10-1 at the left side of the shaft 10, and a large diameter portion 10-2 formed integrally at the right side.

The external spline 10-1 of this shaft 10 meshes with a spline of a hub 12 to rotate together with each other all the time. The hub 12 has a boss 12-1 at its center, thin flange portions 12-2 extending outward in the radial direction from the boss, and a spline 12-3 formed on the outer surface of a peripheral ring portion of the flange. The spline 12-3 of the hub 12 meshes with a spline 14-1 of an annular sleeve 14 so that the hub 12 supports the sleeve 14 to rotate together with each other and the sleeve 14 being movable in regard to the hub 12 in the axial direction.

At the both sides of the spline 14-1, the chamfer surfaces 14-1a, 14-1b are respectively formed. On the inner side of the spline 14-1, a groove 14-2 is formed and has a first tapered surface 14-2a and a second tapered surface 14-2b, as shown in FIG.3.

The sleeve 14 has an annular groove 14-3 for a shift fork, not shown, at the peripheral side of the sleeve, and the shift fork, connected to a shift lever and not shown, is partly inserted in the groove 14-3 to be moved by the shift lever in the axial direction.

The large diameter portion 10-2 of the shaft 10 supports a third speed drive gear (shift gear) 18 on the bearing 16a to rotate freely from the shaft 10. The 3rd speed drive gear 18 always meshes with a 3rd speed driven gear formed integrally with an output shaft, not shown, parallel to the shaft 10. The 3rd speed gear 18 has a clutch gear 20 formed integrally with the 3rd speed gear 18 at the hub side of it, and also has a conic friction surface 20-1 and a spline 20-2 of the outside of the clutch gear 20.

On the other hand, on the external spline 10-1 a bush 22 is disposed next to the left side of the hub 12 and a 4th speed gear (sift gear) 24 is supported on a bearing 16b to rotate freely from the shaft 10.

At the hub 12 side of the 4th speed gear 24, the 4th speed gear 24 has a clutch gear 26, formed integrally with the 4th speed gear 24, with a conic friction surface 26-1 and a spline 26-2 at the outside of the clutch gear 26.

The sleeve 14 is designed to have its length and its position to move and get a 3rd speed position apart a certain distance to the right hand in FIG.1 from a neutral position and a 4th speed position apart a certain distance to the left hand from the neutral position.

At the neutral position, the sleeve 14 mesh with only the spline 12-3 of the hub 12, not with the clutch gears 20 and 26.

At the 3rd speed position, the sleeve 14 is moved to the right hand to mesh with the spline 12-3 of the hub 12 at its left side portion, also with the spline 20-2 of the clutch gear 20 at its right side portion.

At the 4th speed position, the sleeve 14 is moved to the left hand to mesh with the spline 12-3 of the hub 12 at its right side portion, also with the spline 26-2 of the clutch gear 26 at its left side portion.

Next, the detail construction of the 3rd gear 18 side of the synchronizer apparatus will be described.

Between the hub 12 and the 3rd gear 18, disposed is a 3rd speed synchronizer ring 28 which has a friction surface 28-1 facing the friction surface 20-1 of the clutch gear 20 and a pressed surface 28-2 at the hub 12 side of it. Therefore, the 3rd speed synchronizer ring 28 is pushed in the axial direction at the pressed surface 28-2 during a synchronizing action to contact each other the friction surfaces 28-1 and 20-1 of the synchronizer ring 28 and the clutch gear 20 being presseed.

The 3rd speed synchronizer ring 28 has three projections 28-3 projecting from the pressed surface 28-2 toward the hub 12 side. These projections 28-2 are formed in a trapezoid-like shape in section, shown in FIG.2, and have a first tapered surface 28-3a and a second tapered surface 28-3b respectively.

The hub 12 has three cut-off portions 12-4 extending toward the external spline 12-3 at the flange portion 12-2 and two side portions 12-4a and 12-4b parallel to each other, a thrust surface 12-4c, a base surface 12-4 and recesses 12-7a and 12-7b.

Between the sleeve 14 and the hub 12 and 3rd speed synchronizer ring 28, and in the cut off portions 12-4 three lever members 30 are disposed.

FIG. 3 shows the relationship with the sleeve 14 and 3-rd speed synchronizer ring 28 and lever members 30 in detail. FIG. 4 shows the lever member 30 viewed from the right side of FIG 3.

The lever members 30 have a first tapered surface 30-1 facing the first tapered surface 14-2a of the sleeve 14 and a first edge portion 30-2 pressing the pressed surface 28-2 of the 3rd speed synchronizer ring 28 respectively. The lever members 30 have a second tapered surface 30-2a at its outer side in the radial direction, shown in FIG.3, to form the first edge portion 30-2.

The lever members 30 also have a rear surface 30-3 at the opposite side of the first edge portion 30-2, and the rear surface 30-3 is formed to have a second edge portion 30-4 at its inner corner in the radial direction.

The lever members 30 work under the principle of leverage during a synchronizing action as described later: the first taped surface 30-1 functions as the point of a force, the first edge portion 30-2 as the point of an action, the second edge portion 30-4 as a fulcrum.

These three lever members 30 respectively have, shown in FIG.2, FIG.3 and FIG.4, two side surfaces 12-4a and 12-4b of the cut-off portion 12-4 of the hub 12, two slidable surfaces 30-5a and 30-5b, projections 30-9a and 30-9b receiving in the recesses 12-7a and 12-7b of the hub 12. The lever members 30 are retained those movement from the position of FIG.2 outward in the radial direction by contacting the projections 30-9a and 30-9b to the recesses 12-7a and 12-7b.

The lever members 30 further have a trapezoid-like aperture 30-6, and are pushable the 3rd speed synchronizer ring 28 by contacting the first and second tapered surfaces 30-6a and 30-6b to the projection 28-3 of the 3rd speed synchronizer ring 28, while they can have an allowance between them.

Namely, the projection 28-3 of the 3rd speed synchronizer ring 28 and the aperture 30-6 of the lever members 30 are positioned to have two spaces between the first tapered surface 28-3a and the aperture 30-6 and between the second tapered surface 28-3b and the aperture 30-6 when the lever members 30 are positioned outward in the radial direction shown in FIG.2. On the other hand, these spaces become smaller when the lever members 30 moves inward.

Accordingly, the 3rd synchronizer ring 28 is able to rotate a little in regard to the lever members 30, the hub 12 and the sleeve 14.

The lever members 30 further respectively have at the 3rd speed gear 18 side a third edge portion 30-7, which is pushed toward the second tapered surface 14-2b of the sleeve 14 during a synchronizing action.

Between the inside portion of the lever member 30 in the radial direction and the base 12-4 f the hub 12 is disposed a spring 32, which has, shown in FIG.2, two elastic arms 32-1a and 32-1b that always push the lever members 30 outward in the radial direction.

The spring 32 has, shown in FIG.1 and FIG.3, a halt portion 32-2 halted by the flange portion 12-2 of the hub 12. The spring 32 further has a grip portion 32-3 caught in the place between the rear side 30-3 of the lever members 30 and a thrust surface 12-4d of the hub 12 and hook potion 32-4 retaining the axial movement of the lever members 30.

Subsequently, the detail construction of the 4th speed gear 18 side of the synchronizer apparatus will be described.

Between the hub 12 and the 4th gear 24 is disposed a 4th speed synchronizer ring 34, which has a friction surface 34-1 facing to the friction surface 26-1 of a clutch gear 26 of the 4th speed gear and on its peripheral surface a spline 34-2 with chamfer surfaces 34-2a and 34-2b.

The chamfer surfaces 34-2a and 34-2b face to the chamfer surfaces 14-1a and 14-1b of the sleeve 14, and can be pushed by the spline 14-1 of the sleeve 14 during a synchronizing action to press the friction surface 34-1 against the friction surface 26-1 of the clutch gear 26 formed integrally with the 4th speed gear 24.

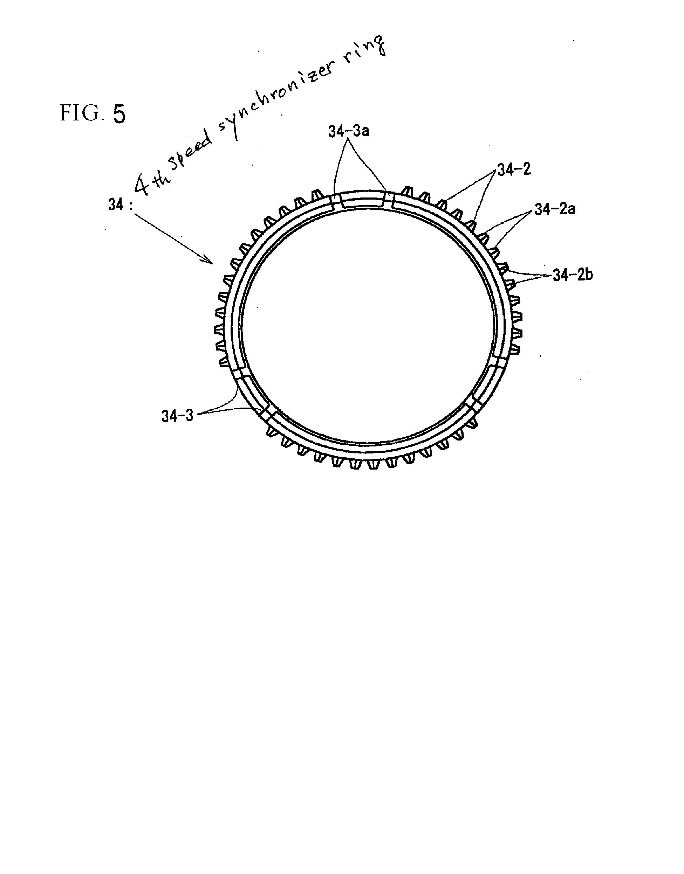

The 4th speed synchronizer ring 34 has a projection 34-3 recievable in the cut-off portion 12-4 of the hub 12 as shown in FIG.5. As the projection 34-3 has an allowance in the rotation direction in regard to the cut-off portion 12-4, the 4th speed synchronizer ring 34 can rotate a little in regard to the hub 12 in the state of FIG.1.

The projection 34-3 further has a pressed surface 34-3a, which can be pushed by the lever member 30.

Next, the operation of the above embodiment of the present invention will be described.

The synchronizing action during a shift operation to the 3rd speed 18 is as follows:

At the neutral position shown in FIG.1, the sleeve 14 are free from meshing with the clutch gears 20 and 26 of the 3rd and 4th speed gears 18 and 24.

Accordingly, in the above case, the 3rd speed gear 18 is not transmitted a torque to drive wheels (not shown) from the shaft 10 which is rotating when an engine (no shown) works and a starting clutch (not shown) is engaged.

Then, to shift to the 3rd speed, the starting clutch is released and the shift fork begins to move, which causes the sleeve 15 to move toward the right hand in FIG.1 in regard to the hub 12 with the spline 14-1 sliding on the spline 12-1 of the hub 12.

This movement causes the first tapered surface 14-2a to contact the first tapered surfaces 30-1 of the three lever members 30 to push the lever members 30 inside in the radial direction against the pushing elastic force of the spring 32 and to rotate the first tapered surface 30-1 clockwise in FIG.1.

This rotation causes the lever members 30 to function as a lever: the first tapered surface 30-1 are pushed by the sleeve 14 to function as the point of a force, the second edge portion 30-4 contacts the thrust surface 12-4d of the hub 12 through a grip portion of the spring 32 to function as a fulcrum, and the first edge portion 30-2 contacts the pressed surface 28-2 of the synchronizer ring 28 to function as the point of an action.

Accordingly, as the force, by which the sleeve 14, pushes the lever members 30 is multiplied, a friction torque is generated between the friction surface 28 of the 3rd speed synchronizer rind 28 and the friction surface 20-1 of the clutch gear 20 integral with the 3rd speed gear 18, which are pressed each other. This friction torque causes the sleeve 14 and the 3rd speed gear 18 to carry out the synchronizing action.

In this synchronization, the 3rd speed synchronizer ring 28 rotates a little in regard to the lever members 30, the first tapered surface 28-3a and the first tapered surface 30-6a come closer to contact each other, and the second tapered surface 28-3b and the second tapered surface 30-6b also come closer to contact each other.

This contact causes the above-mentioned friction torque to apply to one of the first tapered surfaces 28-3a and 30-6a and the second tapered surfaces 28-3b and 30-6b, and consequently the lever members 30 are forced to spread outward in the radial direction. At this time, the sleeve continues to push the first tapered surface 30-1 of the lever members 30.

Namely, the angular relationship of the first tapered surfaces 14-2 and 30-1 of the sleeve 14 and the lever members 30, the holes 30-6 of the lever members 30, the first tapered surfaces 30-6a and 30-6b of the 3rd speed synchronizer ring 28, and the second tapered surfaces 28-2a and 28-2b is designed to retain the sleeve 14 from moving inward in the radial direction during the synchronizing action.

Accordingly, the pushing force, by which the sleeve 14 pushes the lever members 30, is multiplied and pushes strongly the 3rd speed synchronizer ring 28, which enhances the synchronizing action by the friction torque generated between the both friction surfaces 28-1 and 20-1.

The friction torque drops out after the synchronizing action ends, which enables the sleeve 14 to move, with pushing down the lever members 30 inward in the radial direction, to mesh the clutch gear 20 and complete the shift.

In the above synchronizing action, the lever members30 move inward in the radial direction, and consequently the phase in the rotational direction of the synchronizer ring 28 becomes to be back to the state of FIG.2 by sliding between the first tapered surfaces 30-6a, 30-6b of the hole 30-6 of the lever members 30 and the second tapered surfaces 28-2a, 28-2b of the synchronizer ring 28.

After the sleeve 14 and the clutch gear 20 mesh with each other, the engine torque is transmitted from the shaft 10 to the 3rd speed gear 10 through the hub 12, the sleeve 14 and the clutch gear 20 to drive the wheels (not shown).

Further more, to move the sleeve 14, with pushing down the lever members 30, inward in the radial direction, it is necessary to overcome the centrifugal forces and the elastic force of the spring 32 for the sleeve 14 to move to the 3rd speed gear 10, for the centrifugal forces applies the lever members 30. The centrifugal forces, as being as large as square of the rotational speed, has a tendency to increase the operation force shifting to the 3rd speed according the vehicle speed while the vehicle running.

The lever members 30, however, are as small as can be disposed in the cut-off portions 12-4 of the hub 12, which enables them to be very light in weight compared to the prior art. This means that the effect of the centrifugal forces is so small that the increase of the operation force shifting to the 3rd speed can be minimized during high speed running.

On the other hand, the second edge portion 30-4 of the lever members 30 push the thrust surface 12-4d of the hub 13 with a large force acting on the fulcrum of the leverage. So the heat treatment is normally necessary on the hub of the steel sintered metal, adopted for a passenger car, to assure wear and abrasion resistance.

But the thrust surface 12-4d of the hub 12 in this embodiment does not need the heat treatment to assure wear and abrasion resistance, for the grip portion 32-3 is caught in the place between the second edge portion 30-4 of the lever members 30 and the thrust surface 12-4d of the hub, avoiding the direct contact between the second edge portion 30-4 and the thrust surface 12-4d.

Next, the synchronization during shifting to the 4th speed will be explained.

To shift from the 3rd speed to the 4th speed, the shift lever, not shown, is moved to the direction opposite to the above shifting operation to the 3rd. By this operation, the sleeve 14 moves toward left hand in FIG.1 and disengage from the clutch gear 20, then moving the sleeve 14 to the 4th speed gear 24 via the neutral position as shown in FIG.1.

As the sleeve 14 moves to the left hand a little from the neutral position, the second tapered surface 14-2b of the sleeve 14 pushes the third edge portions 30-7 of the lever members 30. By this movement, the rear surface 30-3 of the lever and the projections 34-3 of the 4rth speed synchronizer ring 34 contacts each other so that the sleeve 14 applies the pushing force to the 4rth speed synchronizer ring 34 against the elastic force of the spring 32, similar to the above shift operation to the 3rd speed, through the lever members 30, being pushed down inward in the radial direction and inclined.

Namely, the pressed surfaces 34-3a of the projections 34-3 of the lever members 30 shown in FIG.5 are pushed in the axial direction.

This causes the friction surfaces 26-1 and 34-1 of the 4th speed synchronizer ring 34 and the clutch gear 26 to be pressed to generate the friction torque between them.

There are allowances between the projections 34-3 of the 4th speed synchronizer ring 34 and the cut-off portions 12-4 of the hub 12 as mentioned above, which makes the 4th speed synchronizer ring 34 rotate by the allowance in the rotational direction in regard to the hub 12 by the friction torque.

The sleeve 14, overcoming the elastic force of the spring 32 and the centrifugal forces acting on the lever members 30, moves with pushing down the lever members 30 using the second tapered surfaces 14-2b. During this movement, one of the chamfer surfaces 14-1a and 14-1b of the sleeve 14 contacts and pushes one of the chamfer surfaces 34-2a and 34-2b of the 4th synchronizer ring 34.

This enforces the friction torque between the friction surfaces 26-1 and 34-1, and the sleeve 14 is stopped its movement by the one of the chamfer surfaces 14-1a and 14-1b of the sleeve 14.

Namely, the angular relationship between the chamfer surfaces 14-1a and 14-1b of the sleeve 14 and the chamfer surfaces 34-2a and 34-2b of the 4th synchronizer ring 34 is designed for the sleeve 14 to move forward with rotating the 4th synchronizer ring 34 back to its original position as long as the friction torque between the friction surfaces 26-1 and 34-1 exists.

The sleeve 14 continues to push the 4th speed gear 24, and later on the rotation speed between the 4th speed synchronizer ring 34 and the 4th speed gear 24 becomes to zero and its friction torque drops out. This means that the synchronizing action is completed. Then the sleeve 14 moves toward the left hand in FIG.1 with rotating the 4th speed gear 24 by using the chamfer surfaces 14-1a and 14-1b, and then meshes with the clutch gear 26.

Accordingly, the engine torque is transmitted from the shaft 10 to the 4th speed gear 24 through the hub 12, the sleeve 14 and the clutch gear 26 to drive the wheels (not shown).

In this synchronizing action, the force acting on the 4th speed synchronizer ring 34 from the lever members 30 through the lever members 30 corresponds to only the elastic force of the spring 32 and the centrifugal forces acting on the lever members 30, differing from the case of the shift operation to the 3rd speed. Namely, the most part of the above force is transmitted through the chamfer surfaces 14-1a, 14-1b, 34-2a and 34-2b.

As the hook portion 32-4 of the spring 32 retains the axial movement of the lever members 30, the lever members 30 do not push the 3rd speed synchronizer ring 28 even when the second tapered surface 14-2b of the sleeve 14 pushes the third edge portions 30-7 of the lever members 30 to be inclined a little.

In the present embodiment, the lever members 30 work as well as keys and springs in the conventional Borg-Warner type synchronizer apparatus while the sleeve pushes the synchronizer ring at the initial stage of the synchronizing action.

Accordingly, the lever members 30 multiplies the force from the sleeve 14 and applies to the 3rd speed gear 18 during the synchronizing action to shift to the 3rd speed gear 18, and wok to act the initial pushing force on the 4th speed synchronizer ring 34 during the synchronizing action to shift to the 4th speed gear 24.

In a manual transmission, the synchronizing capacities at low speeds such as the 1st, 2nd and 3rd speeds normally need to be larger than the high speeds, but in this embodiment the synchronizing capacity at the 3rd increases by using leverage of the lever members 30, which enables the 3rd and 4th synchronizer rings to be the same diameters. This reduces a manufacturing cost, because it eliminates complicate construction of the Borg-Warner type synchronizer apparatus for the 3rd speed with multi-cones (e.g. a double-cone type, a triple-cone type and the like).

Moreover, this embodiment can reduce the size of the lever members 30, which minimizes the centrifugal force acting on the lever members 30 during shift operation to the high speed (e.g. the 3rd speed).

Furthermore, the lever members 30 are disposed in the cut-off portions 12-4 of the flange portion 12-2, the axial space for setting the lever members 30 does not increase, which enables the synchronizer apparatus of this embodiment to outplace in almost the same size the synchronizer apparatus without the lever members.

Moreover, as the lever members 30 and the spring 32 therein function to apply the initial pushing force to the 4th speed synchronizer ring 34 during the synchronizing action to the 4th speed, this embodiment eliminates normal parts such as keys for the synchronizing action to the 4th speed.

In stead of the 4-speed transmission with the lever members 30 set to the 3rd synchronizer ring 34 according to the above embodiment, the lever members can be applied to the forward 5-speed transmission. The 5-speed transmission normally has a reverse gear and a 5th speed gear at each side of the hub respectively. This synchronizer apparatus for the 5speed and the reverse can be obtained, not shown, from the modification: the shaft 10 of FIG.1 is used as the output shaft, the 3rd speed gear 18 of FIG.1 is replaced by the reverse gear (shift gear), and the 4th speed gear 24 in FIG.1 is replaced by a 5th speed gear (shift gear), which enables the operation force shifting to the reverse drive to be lighter by using leverage of the lever members and obtain the large torque capacity enough for the reverse drive.

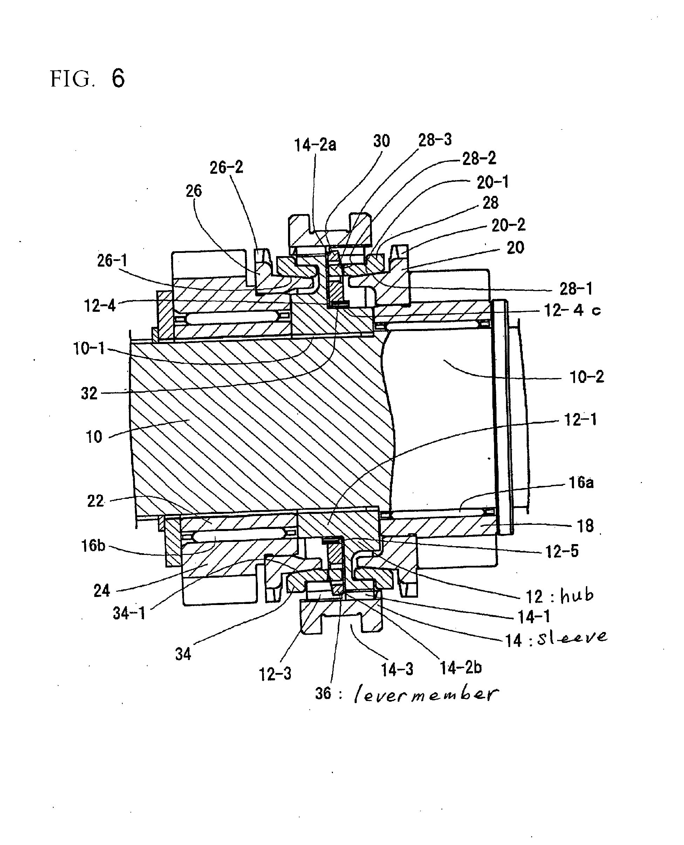

FIG.6, a sectional view corresponding to FIG.1, shows the second embodiment of the present invention. Only the different parts from FIG.1 will be explained and the same parts will be abreviated.

The most different parts are the lever members 36 using leverage for the 4 speed which are disposed at the 4th speed gear 24 side.

The hub 12 has cut-off portions 12-4 at the side of the 3rd speed gear 18 and cut-off portions 12-5 at the side of 4th speed gear 24 respectively. The cut-off portions 12-5 receive the lever members 36 for the 4th speed.

The cut-off portions 12-4 for the 3rd speed and the cut-off portions 12-5 for the 5th speed are disposed in the phase of 60 degrees apart from each other in the rotational direction and at each 3 places.

The 4th speed synchronizer ring 34 and the 3rd speed synchronizer ring 28 are formed in the same shape. The sleeve 14 has a first tapered surfaces 14-2a to push of the lever members 30 for the 3rd speed and a second tapered surface 14-2 to push the lever members 36 for the 4th speed.

As the lever members 30 for the 3rd speed does not need to push the 4th speed synchronizer ring 34, the spring 32 has no hook portion.

Next, the operation of the second embodiment will be explained.

The synchronizing action to the 3rd gear18 is done in the same way as mentioned in the first embodiment.

The synchronizing action to the 4th gear24 is done in the same way as the 3rd gear 18, which means that the lever members 36 for the 4th speed push the 4th speed synchronizer ring 34 by the multiplied force using leverage of the lever members 36.

As the second embodiment is constructed above, it can obtain a high synchronizing capacity using leverage of the lever members 30 and 36 as the same as the first embodiment. It can reduce the space in the axial direction, so it becomes almost the same space as the conventional synchronizer apparatus without lever members even when the lever members 30 and 36 are set.

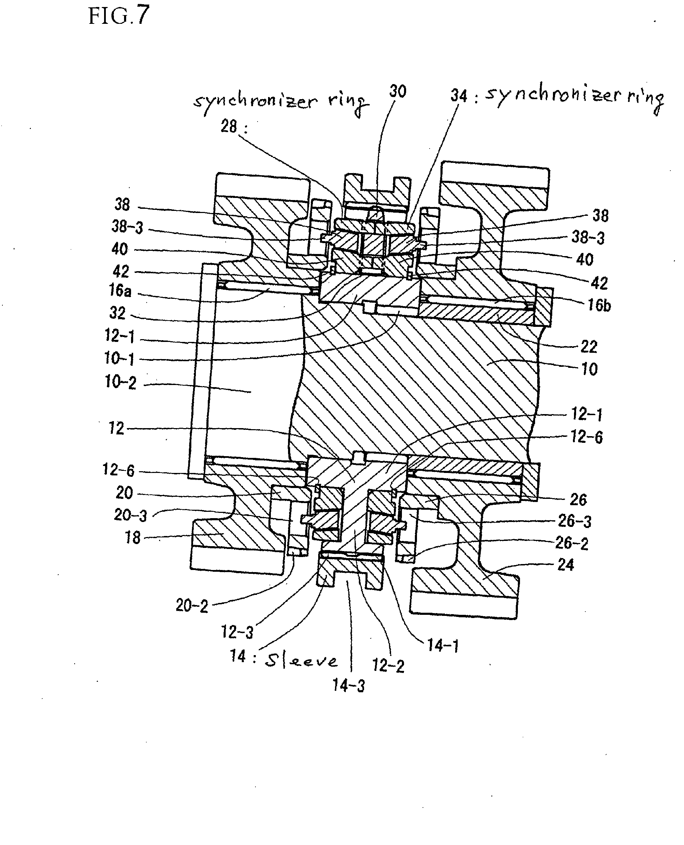

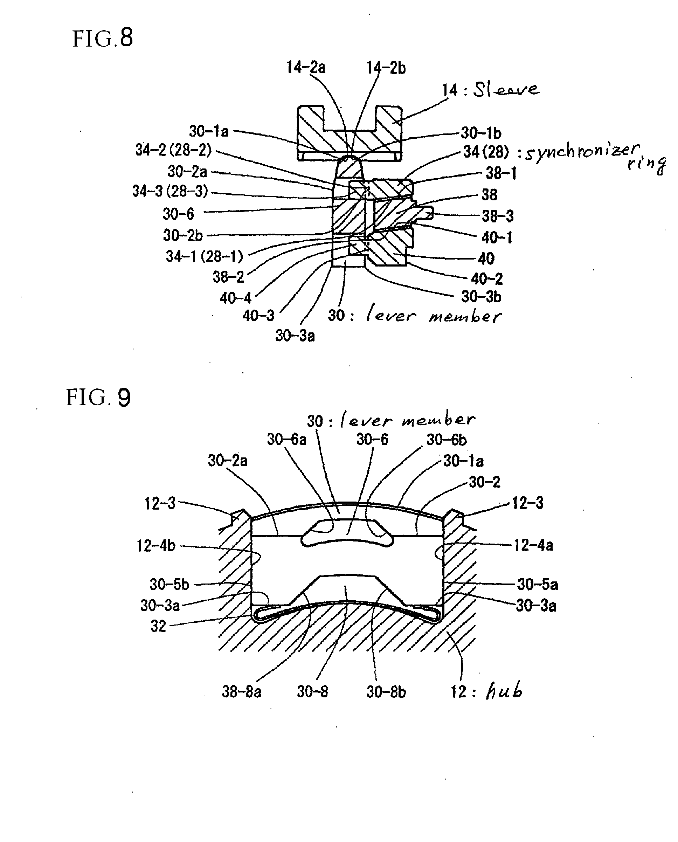

Fig.7, a sectional view corresponding to FIG.1, shows the third embodiment of the present invention. FIG.8 shows a fragmentary enlarged details of FIG.7. FIG.9 shows a fragmentary details of the lever members 30, the spring 30 and the hub 12 viewing from the left side of FIG.8.

The different parts of the third embodiment from the first embodiment will be explained, abbreviating the same parts as the first embodiment.

This embodiment relates to a transmission with the 3rd speed gear (shift gear) 18 and the 2nd speed gear (shift gear) 24 for a commercial car, whose fundamental construction is almost the same as the first embodiment except that the shaft 10 works as the output shaft.

Accordingly, the 3rd speed gear 18 and the 2nd speed gear 24 respectively mesh with gears, not shown, formed integrally with a counter shaft driven by an input shaft.

The 3rd speed gear 18 is disposed at the left side of FIG.1, and the 2nd speed gear 24 at the right side instead of the 4th speed gear of FIG.1. The 2nd synchronizer ring 34 is put the same number of FIG.1.

The most different parts are that each synchronizer apparatus has a cone ring 38 and an inner ring 40 in addition to the synchronizer rings 28 and 34 to build a so-called double- cone type synchronizer apparatus and that the lever members 30 push the synchronizer rings 28 and 34 at the both sides of the hub 12 by the multiplied force using leverage of the lever members 30.

Namely, the clutch gears 20 and 26, formed integrally with the 3rd speed gear 18 and the 2nd speed gear 26, have holes 20-3 and 26-3 respectively instead of the friction surfaces. The holes 20-3 and 26-3 are contactable with projections 38-3 of the cone ring 38. The cone ring 38 and the clutch gears 20 and 26 are rotatable together and movable a little in the axial direction in regard to each other.

The cone ring 38 has a first conical friction surface 38-1 on the inner side of it and a second conical friction surface 38-2 on the outer side as shown in FIG.8.

At the inner side of the cone ring 28 is disposed an inner ring 40 which has a conical friction surface 40-1 on the outer side of it. The friction surface 40-1 can contact and press the second friction surface 38-2 of the cone ring 38. The inner ring 40 is restricted from moving away in the axial direction from the flange 12-2 of the hub 12 by a snap ring 42 which is set in a groove 12-6 of the hub 12 and contacts the front end portion 40-2 of the inner ring 40.

The inner ring 40 has a thrust surface 40-3 and projections 40-4 at the lever member 30 side. The projections 40-4 are formed in the same shape as the projections 28-3 of the synchronizer ring 28 of the first embodiment, and have two first tapered surfaces 40-4a and 40-4b, not shown.

The synchronizer rings 28 and 34, formed in the same shape as the first embodiment, have friction surfaces 28-1 and 34-1, pressed surfaces 28-2 and 34-2, and projections 28-3 and 3-3 respectively, not explained in detail.

The friction surfaces 28-1 and 34-1 can respectively press the first friction surface 38-1.

The lever members 30 are disposed at three places and caught in each cut-off portion 12-4 on the flange portion 12-2 of the hub 12 extending toward the spline 12-3 on the peripheral side of the hub 12.

The lever members 30, shown in FIG.8 and FIG.9, have a hole 30-6 and a cut-off portion 30-8 which have the first tapered surface 30-6a, the second tapered surface 30-6b, the third tapered surface 30-8a, and the fourth tapered surface 30-8b respectively.

The hole 30-6 and the cut-off portion 30-8 are contactable with projections 28-3, 34-3 and 40-4 of the synchronizer rings 28 and 34 at each side of the hub 12 and the inner ring 40 with an certain allowance in the rotational direction.

The lever members 30 have first and second tapered surfaces 30-1a and 30-1b facing the first and second tapered surfaces 14-2a and 14-2b of the sleeve 14. The lever members 30 further have first and second edge portions 30-2a and 30-2b which can push the pressed surfaces 28-2 and 34-2 of the synchronizer rings 28 and 34.

The lever members 30 further have the third and fourth edge portions 30-3a and 30-3b at their inner sides.

Next, the operation of the third embodiment will be explained.

As described above, the lever members 30 pushes the synchronizer rings 28 and 34 at each side of the hub 12 by a multiplied force using leverage of the lever members 30. But in this embodiment, the relationship of the positions between the point of a force, the point of an action and a fulcrum is different from the first embodiment of FIG.1.

Namely, the relationship becomes as follows e.g. in the synchronizing action to shift to the 2nd speed.

The point of a force corresponds to the first tapered surface 30-1a pressed by the first tapered surface 14-1 of the sleeve 14, the point of an action to the second edge portion 30-2b, the fulcrum to the third edge portion 30-3a. Although the second edge portion 30-2b pushes the pressed surface 34-4 of the 2nd speed synchronizer ring 34 as well as the first embodiment of FIG.1, the third edge portion 30-3a as the fulcrum contacts the thrust surface 40-3 of the 3rd speed inner ring 40, and the force acting on the fulcrum is transmitted to the groove 12-6 of the hub 12 through the 3rd speed inner ring 40 and the snap ring 42.

Accordingly, the force acting on the fulcrum is transmitted in the path different from the first embodiment, but the force is finally transmitted to the hub 12. This causes the force from the sleeve 14 to be multiplied by using leverage, and the multiplied force pushes the 2nd speed synchronizer ring 34.

The 2nd speed synchronizer ring 34, pushed by the lever members 30, presses its friction surface 34-1 to the first friction surface 38-1 of the cone ring 38. The pressure force is transmitted from the second friction surface 38-2 of the cone ring 38 to the friction surface 40-1 of the inner ring 40, then finally forced by groove 12-6 of the hub 12 through the snap ring 42 at the 2nd speed gear 24 side.

The shift operation to the 3rd speed gear 18 is in contradiction to the above-mentioned operation. The force acting on the fulcrum is transmitted by the snap ring 42 at the 2nd speed gear 24 side, and the force acting on the point of the action is multiplied and transmitted by the snap ring 42 at the 3rd speed gear 18 side.

As understood from a transmission of the force pushed at the point of the action, the synchronization is carried out by friction torque at two places between the friction surface 34-1 of the 2nd speed synchronizer ring 34 and the first friction surface 38-1 of the cone ring 38 and between the second friction surface 38-2 of the cone ring 38 and the friction surface 40-1 of the inner ring 41. Hence the synchronizer apparatus of this embodiment can obtain a friction torque larger than the first embodiment, a larger synchronizing capacity.

Moreover, as the inner ring 40 is determined its position in the axial direction by the groove 12-6 of the hub 12, not determined by an accuracy of position of a shift gear (the 3rd speed ear 18 or the 2nd speed gear 24 in this embodiment), this embodiment can obtain lever ratio larger by just that much (increase of the accuracy of position).

Moreover, as the whole synchronizer apparatus is fixed to the hub 12 by the snap ring 42, it can be easily built by adjusting the cumulative dimensions causing from the synchronizer rings 28 and 34, the cone ring 38, the inner ring 40 and the like (by changing thickness of the snap ring 42), which substantially increases an accuracy of position, to obtain lever ratio larger by just that much.

Namely, this embodiment can obtain a double cone type synchronizer apparatus which can reduce the effect of accuracy of dimensions of the parts to lever ratio and have high synchronizing capacity.

Moreover, as the whole synchronizer apparatus is set to the hub 12 by the snap ring 42, this embodiment can obtain a module combining the hub 12 and the sleeve 14 with the whole synchronizer apparatus, which brings an advantage of easy controlling its assembly and manufacturing.

By the way, although the third embodiment is adopted to the synchronizer apparatus with the 2nd and 3rd speed gears, the 2nd and 3rd speed gears can be replaced by a 1st speed gear and a reverse gear, which can work as well as the above.

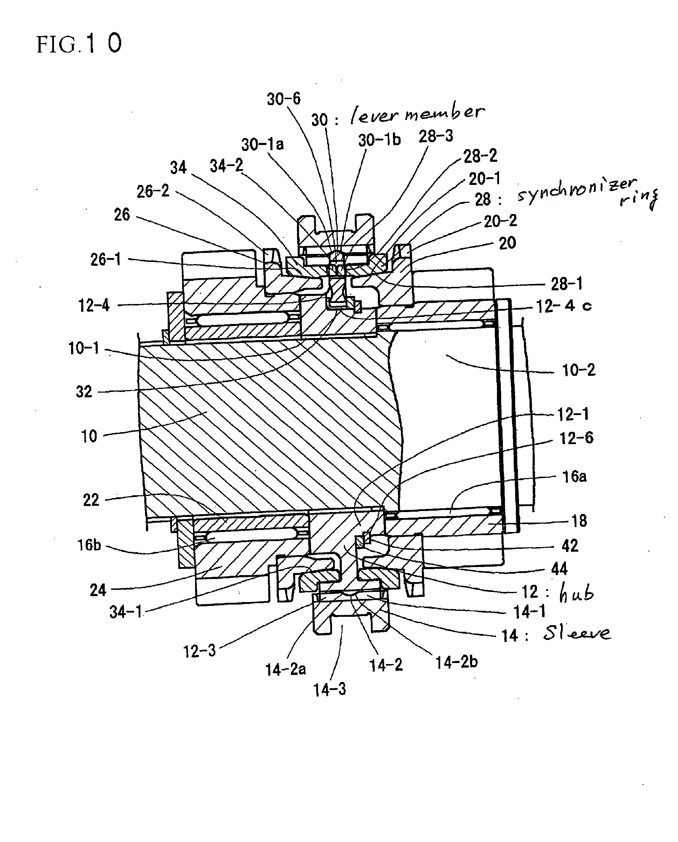

Next, FIG.10, a sectional view corresponding to FIG.1, shows the fourth embodiment of the present invention. The different parts from the first embodiment will be explained, abbreviating the same parts.

This embodiment has a fundamentally similar construction of the first embodiment, and the lever members 30 can push the synchronizer rings 28 and 34 at each side of the hub 12 by the multiplied force using leverage as well as the third embodiment of FiG.7.

Namely, the sleeve 14 and the lever members 30 are formed in the same shape as the third embodiment, and the lever members 30 have a hole 30-6 contactable to the projections 28-3 and 34-3 of the 3rd and 4th speed synchronizer rings 28 and 34 with a certain allowance.

The hub 12 has a groove 12-6, and a snap ring 42 is held in it. The snap ring 42 retains an axial movement of the lever members 30 through a thrust washer 44, and is loaded by the force acting on the fulcrum of leverage while the lever members 30 pushes the 4th speed synchronizer ring 34.

This fourth embodiment works as well as the first embodiment when the 3rd speed synchronizer ring 28 is pushed.

On the other hand, when the 4th synchronizer ring 34 is pushed, the lever members 30 multiply the force from the sleeve 14 by using leverage with the thrust washer becoming the fulcrum.

This fourth embodiment, abbreviated its detail explanation, can obtain a high synchronizing capacity by using leverage of the lever members 30, and set the lever members 30 in almost the same space in the axial direction as the conventional synchronizer apparatus without the lever members.

As described above, the synchronizer apparatus of each embodiment of the present invention can obtain a strong friction torque for synchronization by using leverage of the lever members without any special space for setting the lever members. Accordingly the synchronizer apparatus becomes compact in size, and can reduce the lever members in weight and size to minimize the centrifugal force acting on the lever members. Furthermore it can reduce its manufacturing cost because the lever members can push the synchronizer rings disposed at each side of the hub.

### INDUSTRIAL APPLICABILITY

As mentioned above, the synchronizer apparatus of the present invention has the lever members to multiply the pushing force from the sleeve to the synchronizer ring, the lever members set in the cut-off portions which have two parallel sides and extends from the boss of the hub toward the peripheral portion of the hub. Accordingly, the present invention provides a useful synchronizer apparatus, in particular for a vehicle, which can eliminate an additional axial space to obtain a compact synchronizer apparatus and minimize the effect on the shift operation force by the centrifugal force.

## Claims

1. A synchronizer apparatus for a transmission comprising:
a shaft transmitting a torque,
a hub having a boss set on the shaft and a flange portion extending outward in a radial direction from the boss, the flange portion having a spline on the peripheral side of the flange portion,
a sleeve having a spline on the inner side of the sleeve, the spline of the sleeve being meshed with the spline of the hub and supported to slide in regard to the hub,
a shift gear integrally having a clutch gear to mesh with the sleeve and a friction surface for a synchronization at the hub side of the shift gear,
a synchronizer ring having a friction surface to be pressed to the friction surface of the shift gear,
a plurality of lever members disposed between the sleeve, the hub and the synchronizer ring, the lever members functioning as a lever to multiply a pushing force of the sleeve toward the shift gear to transmit the multiplied force to the synchronizer ring,
the hub having a plurality of cut-off portions , the cut-off portions being formed at the flange portion extending to the peripheral side and having side surfaces parallel to each other,
the lever members being disposed in the cut-off portions and biased outward in the radial direction to contact the sleeve and having a plurality of surfaces slidable on the side surfaces the cut-off portions.

2. A synchronizer apparatus for a transmission as set forth in claim 2 in which the synchronizer ring has a pressed surface pushed by the lever members and a projection projecting from the pressed surface toward the lever members, the projection being formed in a trapezoid-like shape in section and having two tapered surfaces, the lever members having one of a hole and a cut-off portion that can contact the projection with allowance in a rotational direction.

3. A synchronizer apparatus for a transmission as set forth in one of claim 1 and claim 2 in which the spring is a leaf spring disposed between an inward portions of the lever members and the hub and has a grip portion, the grip potion of the spring being caught in a place between edge portions as fulcrums of the lever members and the hub.

4. A synchronizer apparatus for a transmission as set forth in one of claim 1 and claim 2 in which the synchronizer rings are respectively disposed at each side of the hub in an axial direction, the lever members being able to push each of the synchronizer rings.

5. A synchronizer apparatus for a transmission set forth in claim 4 in which the lever members pushes one of the synchronizer rings by a multiplied force using leverage from a movement of the sleeve toward the shift gear, and pushing the other of the synchronizer rings by a substantially constant force in an initial stage of a synchronizing action.

6. A synchronizer apparatus for a transmission comprising:
a shaft transmitting a torque,
a hub having a boss set on the shaft and a flange portion extending outward in a radial direction from the boss, the flange portion having a spline on the peripheral side of the flange,
a sleeve having a spline on the inner side of the sleeve, the spline of the sleeve being meshed with the spline of the hub and supported to slide in regard to the hub,
a shift gear integrally having a clutch gear to mesh with the sleeve and a friction surface for a synchronization at the hub side of the shift gear,
a cone ring rotatable together with the clutch gear and having inner and outer friction surfaces on an inner and outer side of the cone ring,
an inner ring which can contact the inner ring with an allowance in a radial direction, the inner ring having a friction surface to be pressed to the inner friction surfaces of the cone ring,
a synchronizer ring which can contact the hub with an allowance in a radial direction, the synchronizer ring having a friction surface to be pressed to the outer friction surface of the cone ring,
a plurality of lever members disposed between the sleeve, the hub and the synchronizer ring, the lever members functioning as a lever to multiply a pushing force of the sleeve toward the shift gear to transmit the multiplied force to the synchronizer ring so that a force acting on a fulcrum of the lever members is transmitted to the hub through the inner ring.
